# EUROPÄISCHE PATENTSCHRIFT

(11) **EP 2 628 985 B1**
(45) Veröffentlichungstag und Bekanntmachung des Hinweises auf die Patenterteilung: **31.01.2018**
(21) Anmeldenummer: 12193444.2
(22) Anmeldetag: 20.11.2012
(51) Int. Cl.: F16K 11/07, F16K 31/00, G05D 23/13

(54) **Verbrühschutzeinrichtung**
Anti-scalding device
Dispositif de protection contre les échaudures

(30) Priorität: 16.02.2012 DE 102012202373
(43) Veröffentlichungstag der Anmeldung: 21.08.2013
(73) Patentinhaber: Joma-Polytec GmbH, 72411 Bodelshausen (DE)
(72) Erfinder: Heinz, Stefan, 72411 Bodelshausen (DE); Diehl, Benjamin, 72116 Mössingen (DE)
(74) Vertreter: DREISS Patentanwälte PartG mbB

(56) Entgegenhaltungen:
- EP-A1- 1 302 711
- DE-A1-102004 050 877
- JP-A- H06 147 333
- US-A- 5 261 597
- US-A- 6 042 015

## Beschreibung

Die Erfindung betrifft eine Verbrühschutzeinrichtung, insbesondere in Form eines Ventils. Verbrühschutzeinrichtungen finden insbesondere in der Hauswassertechnik im Warmwasserkreislauf Verwendung. Insbesondere dann, wenn Warmwasser mittels eines an einem Solarkollektor angeschlossenen Wärmetauscher erwärmt wird, kann nicht ausgeschlossen werden, dass die Wassertemperaturen sehr hoch, auch im Bereich von 60° bis 90°, oder gar darüber, liegen. Um zu vermeiden, dass derart heißes Wasser über das Warmwassersystem zur Entnahmestelle gelangt, finden sogenannte Verbrühschutzeinrichtungen oder Verbrühschutzventile Verwendung. Beim Überschreiten einer bestimmten Temperatur wird in das Warmwassersystem Kaltwasser eingeleitet, um die Temperatur des Warmwassers zu senken. US6042015 offenbart eine Verbrühschutzeinrichtung gemäß dem Oberbegriff des Anspruchs 1. Der vorliegenden Erfindung liegt die Aufgabe zugrunde, eine Verbrühschutzeinrichtung, insbesondere ein Verbrühschutzventil bereitzustellen, das auf einfache Art und Weise herstellbar ist und dennoch auf funktionssichere Art und Weise arbeitet.

Diese Aufgabe wird durch eine Verbrühschutzeinrichtung mit den Merkmalen des Anspruchs 1 gelöst. Eine solche Verbrühschutzeinrichtung sieht folglich einen einen Zylinderraum umschließenden Grundkörper auf. Die Einrichtung weist zudem einen Kaltwasserzufluss und einen Warmwasserzufluss auf, die in den Zylinderraum münden. Ferner ist am Grundkörper ein vom Zylinderraum kommender Mischwasserabfluss vorgesehen. Dabei ist im Zylinderraum ein verlagerbarer Mischkolben vorhanden, mit dem wenigstens abschnittsweise der Warmwasserzufluss verschlossen und/oder der Kaltwasserzufluss geöffnet werden kann. Zur Verlagerung des Mischkolbens ist ein sich temperaturabhängig verstellendes Stellglied derart vorgesehen, dass bei Überschreiten einer Grenztemperatur der Warmwasserzufluss wenigstens abschnittsweise geschlossen und/oder der Kaltwasserzufluss wenigstens abschnittsweise geöffnet wird. Bei einer derartigen Einrichtung ist die Grundstellung des Mischkolbens derart, dass Warmwasser vom Warmwasserzufluss durch den Zylinderraum hin zum Mischwasserabfluss fließt, ohne dass Kaltwasser zugeführt wird. Erst bei Überschreiten der Grenztemperatur, die insbesondere im Bereich von 50° bis 70° und vorzugsweise im Bereich von 60° liegt, verstellt sich das Stellglied derart, dass der Mischkolben so bewegt wird, dass vorzugsweise zum einen der Warmwasserzufluss wenigstens abschnittsweise verschlossen wird und gleichzeitig vorzugsweise der Kaltwasserzufluss wenigstens abschnittsweise, vorzugsweise im gleichen Maß wie der Warmwasserzufluss, geöffnet wird. Dies erfolgt vorzugsweise so, dass die Wassermenge, die über den wenigstens abschnittsweise verschlossenen Wasserzufluss weniger in den Zylinderraum fließt, der Wassermenge entspricht, die über den wenigstens abschnittsweise geöffneten Kaltwasserzufluss in den Zylinderraum fließt. Insofern ändert sich an der Menge des Volumenstroms nichts.

Dadurch, dass sich das Stellglied temperaturabhängig verstellt, sind keine motorisch oder sonst antreibbaren Bauteile zur Mischung von Kaltwasser und Warmwasser erforderlich. Die Einrichtung weist dabei insgesamt vergleichsweise wenige Bauteile auf und arbeitet dennoch funktionssicher.

Besonders vorteilhaft ist, wenn der Grundkörper und/oder der Mischkolben aus einem Kunststoff und insbesondere einem thermoplastischen Kunststoff hergestellt sind. Das Verwenden von Kunststoffteilen hat den Vorteil, dass die Teile vergleichsweise billig hergestellt werden können. Zudem wird vermieden, dass Materialauslagerungen, wie sie beispielsweise bei metallischen Bauteilen auftreten, unterbunden werden können. In dem Zusammenhang hat sich herausgestellt, dass bekannte Verbrühschutzeinrichtungen, die metallische Bauteile aufweisen, zur besseren Gleiteigenschaft der Teile einen nicht unerheblichen Bleianteil enthalten, der verschleißbedingt dann ins Wasser gelangt. Insbesondere bei Hauswasser- bzw. Trinkwassersystemen kann dies zu Gesundheitsschädigungen führen.

Bei einer weiteren, ebenfalls besonders bevorzugten Ausführungsform der Erfindung ist vorgesehen, dass das Stellglied aus einer Formgedächnislegierung derart hergestellt ist, dass es bei Überschreiten der Grenztemperatur seine Form ändert und so auf den Mischkolben wirkt, dass er den Warmwasserzufluss wenigstens abschnittsweise schließt und/oder den Kaltwasserzufluss wenigstens abschnittsweise öffnet. Unter Formgedächnislegierungen werden solche Legierungen verstanden, die bei einer Temperatur ihre Form umwandeln. Die Formumwandlung basiert dabei in der Regel auf der temperaturabhängigen Gitterumwandlung verschiedener Kristallstrukturen (allotrope Umwandlung) der Werkstoffe. Die Werkstoffe und auch die Struktur des Stellglieds sind dabei so zu wählen, dass das Stellglied bei Überschreiten der Grenztemperatur seine Form wie beschrieben entsprechend ändert.

Das Stellglied ist dabei vorzugsweise als Federelement, und vorteilhafterweise als Spiralfederelement ausgebildet. Eine derartige Ausbildung hat sich insbesondere im Zusammenhang mit der Verwendung von Formgedächnislegierungen als vorteilhaft erwiesen. Denkbar ist allerdings auch in anders ausgebildetes Stellglied, beispielsweise ein Wachselement-Stellglied.

Ferner ist vorteilhaft, wenn auf der dem Stellglied abgewandten Seite des Mischkolbens ein Gegenfederelement vorgesehen ist, dass den Mischkolben entgegen der Stellkraft des Stellelements beaufschlagt. Das Gegenfederelement kann dabei insbesondere ein Plattfederelement oder ein Spiralfederelement sein. Hierdurch kann eine geeignete Gegenkraft bereitgestellt werden, die das Stellglied insbesondere vor Überschreiten der Grenztemperatur in einer definierten Grundstellung hält. Bei Überschreiten der Grenztemperatur wird dann das Stellglied verformt, und das Gegenfederelement wird entsprechend entgegen seiner Federkraft zusammengedrückt.

Der Mischkolben ist hohl ausgebildet. Ferner sieht er eine mit dem Warmwasserzufluss zusammenwirkende Warmwasseröffnung und eine mit dem Kaltwasserzufluss zusammenwirkende Kaltwasseröffnung vor. Die Warmwasseröffnung und die Kaltwasseröffnung liegen dabei in der Mantelfläche des Mischkolbens. Ferner sind die Warmwasseröffnung und die Kaltwasseröffnung vorteilhafterweise aufeinander gegenüberliegenden Seiten der Mantelfläche angeordnet. Zudem ist vorteilhaft, wenn die Warmwasseröffnung sich im Bereich einer anderen Höhe des Mischkolbens befindet, wie die Kaltwasseröffnung. Dabei kann zudem vorteilhaft sein, wenn die dem Mischwasserabfluss abgewandte Stirnseite des Mischkolbens geschlossen und die dem Mischwasserabfluss zugewandte Stirnseite offen ist. über die offene Stirnseite kann dann das von der Warmwasseröffnung und/oder Kaltwasseröffnung einströmende Wasser hin zum Mischwasserabfluss fließen. Eine derartige Ausbildung des Kolbens kann leicht hergestellt werden. Sie benötigt vergleichsweise wenig Bauraum. Dennoch kann ein derartiger Kolben funktionssicher arbeiten.

Das Stellglied wirkt vorteilhafterweise einerseits gegen den Mischkolben und andererseits gegen einen grundkörperseitigen Halteabschnitt. Der Halteabschnitt kann dabei einstückig am Grundkörper vorgesehen sein oder an dieses angeformt sein. Der Halteabschnitt kann aber auch als separates Bauteil, beispielsweise als Halteplatte oder Halterung, der am Grundkörper befestigt ist, ausgebildet sein.

Der Zylinderraum als solcher ist vorteilhafterweise so ausgebildet, dass er auf der dem Mischwasserabfluss zugewandten Seite offen ist, so dass einströmendes Wasser hin zum Mischwasserabfluss abfließen kann. Zudem ist vorteilhaft, wenn der Zylinderraum auf der dem Mischwasserabfluss abgewandten Seite einen geschlossenen Zylinderboden vorsieht.

Dabei kann dann das Gegenfederelement einerseits gegen den Mischkolben und andererseits gegen den Zylinderboden wirken.

Um die Gleiteigenschaften des Mischkolbens im Zylinderraum zu verbessern, ist denkbar, dass der Zylinderraum von einer im Grundkörper vorhandenen Hülse umschlossen wird. Die Hülse kann insbesondere in den Grundkörper eingespritzt oder eingegossen sein. Die Hülse kann dabei aus einem Kunststoff oder aus einem Metall sein.

Ferner ist vorteilhaft, wenn am Grundkörper und/oder am Mischkolben Führungsabschnitte zur Führung des Mischkolbens im Zylinderraum vorgesehen sind. Hierdurch kann eine kontrollierte Bewegung des Mischkolbens gewährleistet werden. Weitere vorteilhafte Ausgestaltungen und Einzelheiten der Erfindung sind der nachfolgenden Beschreibung zu entnehmen, anhand derer ein Ausführungsbeispiel der Erfindung näher beschrieben und erläutert ist. Es zeigen:
- Figur 1: eine erfindungsgemäße Verbrühschutzeinrichtung im Teillängsschutz in der Grundstellung;
- Figur 2: die Einrichtung gemäß Figur 1 in der Mischstellung und
- Figur 3: die Einrichtung gemäß Figur 1 im Längsschnitt, allerdings im Vergleich zu Figur 1 und 2 um 180° um die Längsachse gedreht.

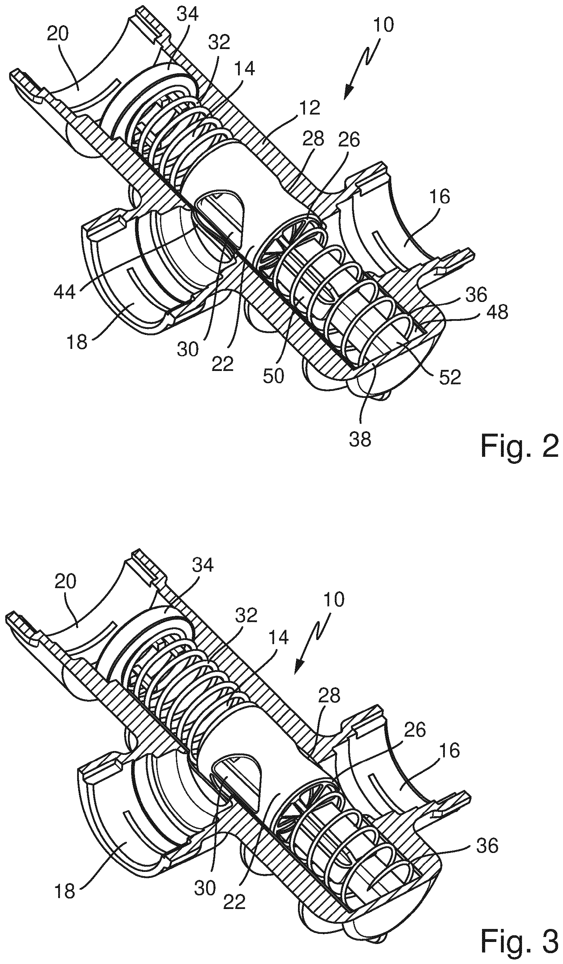

Die in den Figuren dargestellte Verbrühschutzeinrichtung 10 umfasst einen Grundkörper 12 aus Kunststoff, in dem ein Zylinderraum 14 vorhanden ist. Im Grundkörper 12 sind insgesamt drei Anschlüsse vorhanden, zum einen ein Kaltwasserzufluss 16, zum anderen ein Warmwasserzufluss 18 und zudem ein Mischwasserabfluss 20. Im Zylinderraum 14 ist ein in axialer Richtung verlagerbarer Mischkolben 22 untergebracht. Wie insbesondere aus Figur 3 deutlich wird, ist der Mischkolben 22 hohl ausgebildet und weist im Längsschnitt eine topfförmige Gestaltung auf. Dabei weist der Mischkolben 22 einen Mantel 24 und einen geschlossenen Boden 26 auf. Im Mantel 24 sind insgesamt zwei Öffnungen, zum einen eine mit dem Kaltwasserzufluss 16 zusammenwirkende Kaltwasseröffnung 28 und zum anderen eine mit dem Warmwasserzufluss 18 zusammenwirkende Warmwasseröffnung 30.

Auf der dem Mischwasserabfluss 20 zugewandten Seite des Mischkolbens 22 befindet sich ein Stellglied 32 in Form einer Spiralfeder, die aus einer Formgedächnislegierung hergestellt ist. Das Stellglied 32 stützt sich dabei einerseits am Mischkolben 22 und andererseits an einem grundkörperseitig angeordneten Stützring 34 ab. Auf der dem Mischwasserabfluss 20 abgewandten Seite des Mischkolbens 22 befindet sich ein spiralförmiges Gegenfederelement 36, das sich einenends am Zylinderboden 38 des Zylinderraums 14 abstützt und andernends gegen den Mischkolben 22 wirkt. Der Mischkolben 22 ist folglich zwischen dem Stellglied 32 und dem Gegenfederelement 36 schwimmend gelagert.

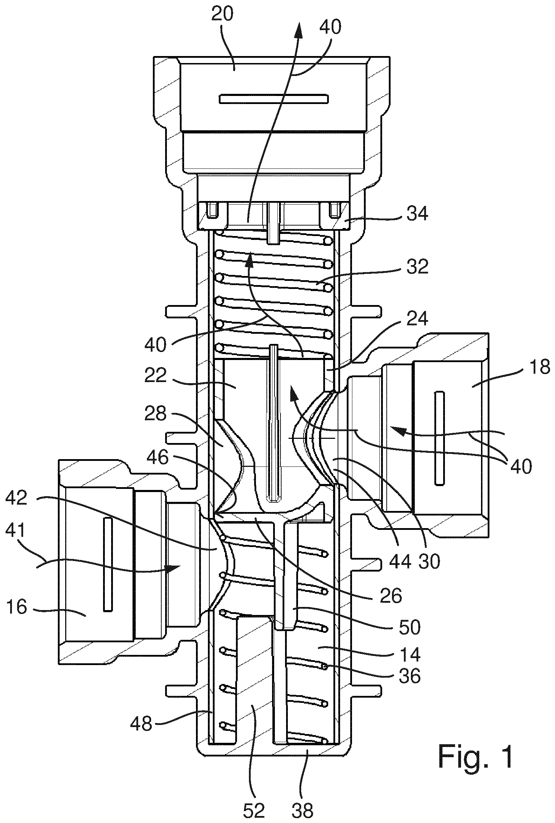

Das Stellglied 32 und das Gegenfederelement 36 sind dabei so ausgebildet, dass bei Temperaturen unterhalb einer Grenztemperatur der Mischkolben 22 eine in der Figur 1 und 3 dargestellte Grundstellung einnimmt. In dieser Grundstellung korrespondiert die Warmwasseröffnung 30 des Mischkolbens 22 mit dem Warmwasserzufluss 18 so, dass über den Warmwasserzufluss 18 einströmendes Warmwasser durch den hin zum Mischwasserabfluss 20 offenen Mischkolben 22 hindurchfließt, das spiralförmige Stellglied 32 sowie den Stützring 34 passiert und die Einrichtung 10 über den Mischwasserabfluss 20 verlässt. In der Figur 3 ist eine derartige Strömung des Wassers mit dem Bezugszeichen 40 angedeutet. Am Kaltwasseranschluss steht Kaltwasser, das mit dem Bezugszeichen 41 angedeutet, unter Druck an.

Wie aus insbesondere Figur 3 deutlich wird, umfasst der Kaltwasserzufluss 16 eine an den Zylinderraum 14 angrenzende Kaltwasserzylinderöffnung 42 und der Warmwasserzufluss 18 eine an den Zylinderraum 14 angrenzende Warmwasserzylinderöffnung.

In der in Figur 3 gezeigten Grundstellung überdeckt die mischkolbenseitige Kaltwasseröffnung 28 nicht die Kaltwasserzylinderöffnung, so dass kein Kaltwasser, kommend vom Kaltwasserzufluss 16, hin zum Mischwasserabfluss 20 fließen kann. Der Boden 26 des Mischkolbens 22 trennt dabei die Kaltwasseröffnung 28 des Mischkolbens 22 von der Kaltwasserzylinderöffnung 42, wobei der dem Kaltwasserzufluss 16 zugewandte Abschnitt des Bodens 26 des Mischkolbens 22 eine Steuerkante 46 bildet.

In der Grundstellung überdeckt die Warmwasseröffnung 30 des Mischkolbens 22 die Warmwasserzylinderöffnung 44 vollständig.

Überschreitet nun die Warmwassertemperatur beim Durchströmen der Verbrühschutzeinrichtung 10 die Grenztemperatur, so dehnt sich das Stellglied 32 in axialer Richtung aus und drängt den Kolben 22 in axialer Richtung gegen die Federkraft des Gegenfederelements 36. Beim Bewegen des Mischkolbens 22 aus der Grundstellung in die in der Figur 2 gezeigte Mischstellung wird zum einen der Warmwasserzufluss 18, bzw. die Warmwasserzylinderöffnung 44 abschnittsweise verschlossen und zum anderen wird der Kaltwasserzufluss, bzw. die Kaltwasserzylinderöffnung 42, im gleichen Maße geöffnet.

Im Mischkolben 22 mischt sich also das Kaltwasser mit dem vom Warmwasserzufluss 18 kommenden Warmwasser. Das in der Verbrühschutzeinrichtung 10 vorhandene Wasser wird dadurch abgekühlt. Unterschreitet es die Grenztemperatur, so verformt sich das Stellglied 32, bzw. sich zusammen, bis es die in der Figur 3 gezeigte Grundstellung wieder erreicht. Die Steuerkante 46 des Bodens 26 des Mischkolbens 22 schließt dann die Verbindung zwischen Kaltwasserzylinderöffnung 42 und Kaltwasseröffnung 28. Kaltwasser wird dadurch nicht mehr zugemischt. Lediglich Warmwasser durchströmt die Verbrühschutzeinrichtung 10. Sollte die Grenztemperatur wieder überschritten werden, so wird der Mischkolben 22, wie beschrieben, nach axial unten bewegt, so dass die Steuerkante 46 die Kaltwasserzylinderöffnung 42 hin zur mischkolbenseitigen Kaltwasseröffnung 28 öffnet.

Wie ebenfalls aus dem Schnitt gemäß Figur 3 deutlich wird, wird der Zylinderraum 14 von einer Hülse 48 umschlossen. Die Hülse 48 kann dabei insbesondere in den Grundkörper 12 eingegossen sein. Im Bereich der Kaltwasserzylinderöffnung 42 und Warmwasserzylinderöffnung 44 weist die Hülse entsprechende Öffnungen auf. Das Vorsehen der Hülse 48 hat dabei den Vorteil, dass eine bessere axiale Lagerung des Mischkolbens 22 gewährleistet werden kann. Die Hülse 48 kann beispielsweise aus einem metallischen Werkstoff oder auch aus einem entsprechend geeigneten Kunststoff sein.

Zur weiteren verbesserten Lagerung des Mischkolbens 22 weist der Mischkolben 22 auf der dem Mischwasserabfluss abgewandten Seite sich nach axial unten erstreckende Führungsabschnitte 50 auf, die mit entsprechenden grundkörperseitigen Gegenführungsabschnitten 52 zusammenwirken.

Die beiden Zuflüsse 16, 18 und der Abfluss 20 können von grundkörperseitigen Gehäuseabschnitten umgeben sein, die insbesondere einen genormten Anschluss für entsprechende Leitungen bilden.

Die beschriebene Verbrühschutzeinrichtung 10 hat zum einen den Vorteil, dass sie vergleichsweise einfach baut. Ferner weist sie vergleichsweise wenige Bauteile auf. Zudem kann sie vollständig oder weitgehend vollständig aus Kunststoff gefertigt sein, so dass eine Schadstoffbelastung des Wassers, welche von metallischen Teilen kommen kann, ausgeschlossen werden kann.

## Patentansprüche

1. Verbrühschutzeinrichtung (10) mit einem einen Zylinderraum (14) umschließenden Grundkörper (12),
mit einem am Grundkörper (12) vorgesehenen, in den Zylinderraum (14) mündenden Kaltwasserzufluss (16),
mit einem am Grundkörper (12) vorgesehenen, in den Zylinderraum (14) mündenden Warmwasserzufluss (18),
mit einem am Grundkörper (12) vorgesehenen, vom Zylinderraum (14) kommenden Mischwasserabfluss (20), wobei im Zylinderraum (14) ein verlagerbarer Mischkolben (22) zum wenigstens abschnittsweise Verschließen des Warmwasserzufluss (18) und/oder Öffnen des Kaltwasserzufluss (16) vorgesehen ist, und
wobei zur Verlagerung des Mischkolbens (22) ein sich temperaturabhängig verstellendes Stellglied (32) derart vorgesehen ist, dass bei Überschreiten einer Grenztemperatur der Warmwasserzufluss (18) wenigstens abschnittsweise geschlossen und/oder der Kaltwasserzufluss (16) wenigstens abschnittsweise geöffnet wird, **dadurch gekennzeichnet, dass** der Mischkolben (22) hohl ausgebildet ist und einen Mantel (24) sowie einen geschlossenen Boden (26) aufweist, wobei der Mantel (24) eine mit dem Warmwasserzufluss (18) zusammenwirkende Warmwasseröffnung (30) und eine mit dem Kaltwasserzufluss (16) zusammenwirkende
Kaltwasseröffnung (28) aufweist, und wobei der Boden (26) unterhalb der Grenztemperatur die Kaltwasseröffnung (28) vom Kaltwasserzufluss (16) trennt.

2. Verbrühschutzeinrichtung (10) nach Anspruch 1, **dadurch gekennzeichnet, dass** der Grundkörper (12) und/oder der Mischkolben (22) aus einem Kunststoff und insbesondere einem thermoplastischen Kunststoff hergestellt sind.

3. Verbrühschutzeinrichtung (10) nach Anspruch 1 oder 2, **dadurch gekennzeichnet, dass** das Stellglied (32) aus einer Formgedächtnislegierungen derart hergestellt ist, dass es bei Überschreiten der Grenztemperatur seine Form ändert und so auf den Mischkolben (22) wirkt, dass er den Warmwasserzufluss (18) wenigstens abschnittsweise schließt und/oder den Kaltwasserzufluss (16) wenigstens abschnittsweise öffnet.

4. Verbrühschutzeinrichtung (10) nach Anspruch 1, 2 oder 3, **dadurch gekennzeichnet, dass** das Stellglied (32) als Federelement und insbesondere als Spiralfederelement ausgebildet ist.

5. Verbrühschutzeinrichtung (10) nach einem der vorhergehenden Ansprüche, **dadurch gekennzeichnet, dass** auf der dem Stellglied (32) abgewandten Seite des Mischkolbens (22) ein Gegenfederelement (36) vorgesehen ist, das den Mischkolben (22) entgegen der Stellkraft des Stellelements beaufschlagt.

6. Verbrühschutzeinrichtung (10) nach einem der vorhergehenden Ansprüche, **dadurch gekennzeichnet, dass** das Stellglied (32) einerseits gegen den Mischkolben (22) und andererseits gegen einen grundkörperseitigen Halteabschnitt (34) wirkt.

7. Verbrühschutzeinrichtung (10) nach einem der vorhergehenden Ansprüche, **dadurch gekennzeichnet, dass** der Zylinderraum (14) auf der dem Mischwasserabfluss (20) zugewandten Seite offen ist und/oder auf der dem Mischwasserabfluss (20) abgewandten Seite einen geschlossen Zylinderboden (38) aufweist.

8. Verbrühschutzeinrichtung (10) nach Anspruch 5 und 7, **dadurch gekennzeichnet, dass** das Gegenfederelement (36) einerseits gegen den Mischkolben (22) und andererseits gegen den Zylinderboden (38) wirkt.

9. Verbrühschutzeinrichtung (10) nach einem der vorhergehenden Ansprüche, **dadurch gekennzeichnet, dass** der Zylinderraum (14) von einer im Grundkörper (12) vorhandenen Hülse (48) umschlossen wird.

10. Verbrühschutzeinrichtung (10) nach einem der vorhergehenden Ansprüche, **dadurch gekennzeichnet, dass** am Grundkörper (12) und/oder am Mischkolben (22) Führungsabschnitte (50, 52) zur Führung des Mischkolbens (22) im Zylinderraum (14) vorgesehen sind.

## Claims

1. A scalding prevention device (10), having a base body (12) surrounding a cylindrical chamber (14), having a cold-water inflow (16) provided on the base body (12) and discharging into the cylindrical chamber (14), having a warm-water inflow (18) provided on the base body (12) and discharging into the cylindrical chamber (14), having a mixed-water outflow (20) provided on the base body (12) and coming from the cylindrical chamber (14), wherein a displaceable mixing piston (22) for at least intermittent closure of the warm-water inflow (18) and/or opening of the cold-water inflow (16) is provided in the cylindrical chamber (14), and wherein for displacing the mixing piston (22), an adjuster (32) that adjusts as a function of temperature is provided such that if a limit temperature is exceeded, the warm-water inflow (18) is closed at least intermittently and/or the cold-water inflow (16) is opened at least intermittently, **characterized in that** the mixing piston (22) is embodied as hollow and has a jacket (24) and a closed bottom (26), and the jacket (24) has a warm-water opening (30) cooperating with the warm-water inflow (18) and a cold-water opening (28) cooperating with the cold-water inflow (16), and the bottom (26), below the limit temperature, separates the cold-water opening (28) from the cold-water inflow (16).

2. The scalding prevention device (10) of claim 1, **characterized in that** the base body (12) and/or the mixing piston (22) are produced from a plastic, and in particular a thermoplastic.

3. The scalding prevention device (10) of claim 1 or 2, **characterized in that** the adjuster (32) is produced from a shape-memory alloy, such that when the limit temperature is exceeded, its shape changes and acts on the mixing piston (22) in such a way that it at least intermittently closes the warm-water inflow (18) and/or at least intermittently opens the cold-water inflow (16).

4. The scalding prevention device (10) of claim 1, 2 or 3, **characterized in that** the adjuster (32) is embodied as a spring element, and in particular as a spiral spring element.

5. The scalding prevention device (10) of one of the foregoing claims, **characterized in that** on the side of the mixing piston (22) facing away from the adjuster (32), a contrary spring element (36) is provided, which acts upon the mixing piston (22) counter to the adjusting force of the adjusting element.

6. The scalding prevention device (10) of one of the foregoing claims, **characterized in that** the adjuster (32) acts on the one hand counter to the mixing piston (22) and on the other counter to a retaining portion (34) located toward the base body.

7. The scalding prevention device (10) of one of the foregoing claims, **characterized in that** the cylindrical chamber (14) is open on the side toward the mixed-water outflow (20) and/or on the side facing away from the mixed-water outflow (20), it has a closed cylinder bottom (38).

8. The scalding prevention device (10) of claims 5 and 7, **characterized in that** the contrary spring element (36) acts counter to the cylinder bottom (38).

9. The scalding prevention device (10) of one of the foregoing claims, **characterized in that** the cylindrical chamber (14) is surrounded by a sheath (48) present in the base body (12).

10. The scalding prevention device (10) of one of the foregoing claims, **characterized in that** on the base body (12) and/or on the mixing piston (22), guide portions (50, 52) are provided for guiding the mixing piston (22) in the cylindrical chamber (14).

## Revendications

1. Dispositif de protection contre les échaudures (10) comprenant un corps de base (12) entourant une chambre cylindrique (14), une arrivée d'eau froide (16) prévue sur le corps de base (12) et débouchant dans la chambre cylindrique (14), une arrivée d'eau chaude (18) prévue sur le corps de base (12) et débouchant dans la chambre cylindrique (14), une sortie d'eau mitigée (20) prévue sur le corps de base (12) et provenant de la chambre cylindrique (14), un piston mitigeur (22) déplaçable étant prévu dans la chambre cylindrique (14) pour au moins en partie fermer l'arrivée d'eau chaude (18) et/ou ouvrir l'arrivée d'eau froide (16), et un élément de régulation (32) se déplaçant en fonction de la température étant destiné à déplacer le piston mitigeur (22) de telle manière que, lorsqu'une température limite est dépassée, l'arrivée d'eau chaude (18) est au moins en partie fermée et/ou l'arrivée d'eau froide (16) est au moins en partie ouverte, **caractérisé en ce que** le piston mitigeur (22) est creux et présente une enveloppe (24) ainsi qu'un fond (26) fermé, l'enveloppe (24) présentant une ouverture pour l'eau chaude (30) coopérant avec l'arrivée d'eau chaude (18) et une ouverture pour l'eau froide (28) coopérant avec l'arrivée d'eau froide (16), et le fond (26), au-dessous de la température limite, séparant l'ouverture pour l'eau froide (28) de l'arrivée d'eau froide (16).

2. Dispositif de protection contre les échaudures (10) selon la revendication 1, **caractérisé en ce que** le corps de base (12) et/ou le piston mitigeur (22) sont fabriqués à partir d'une matière plastique et en particulier à partir d'une matière thermoplastique.

3. Dispositif de protection contre les échaudures (10) selon la revendication 1 ou 2, **caractérisé en ce que** l'élément de régulation (32) est fabriqué à partir d'un alliage à mémoire de forme, de telle manière que, lorsque la température limite est dépassée, il modifie sa forme et agit sur le piston mitigeur (22) de manière à fermer au moins en partie l'arrivée d'eau chaude (18) et/ou à fournir au moins en partie l'arrivée d'eau froide (16).

4. Dispositif de protection contre les échaudures (10) selon la revendication 1, 2 ou 3, **caractérisé en ce que** l'élément de régulation (32) est réalisé sous la forme d'un élément ressort et en particulier sous la forme d'un élément ressort spiral.

5. Dispositif de protection contre les échaudures (10) selon l'une quelconque des revendications précédentes, **caractérisé en ce qu'**un élément ressort complémentaire (36), qui sollicite le piston mitigeur (22) à l'encontre de la force de régulation de l'élément de régulation, est prévu sur la face du piston mitigeur (22) opposée à l'élément de régulation (32) .

6. Dispositif de protection contre les échaudures (10) selon l'une quelconque des revendications précédentes, **caractérisé en ce que** l'élément de régulation (32) agit d'une part contre le piston mitigeur (22) et d'autre part contre une section de retenue (34) côté corps de base.

7. Dispositif de protection contre les échaudures (10) selon l'une quelconque des revendications précédentes, **caractérisé en ce que** la chambre cylindrique (14) est ouverte sur la face tournée vers la sortie d'eau mitigée (20) et/ou présente sur la face opposée à la sortie d'eau mitigée (20) un fond cylindrique (38) fermé.

8. Dispositif de protection contre les échaudures (10) selon les revendications 5 et 7, **caractérisé en ce que** l'élément ressort complémentaire (36) agit d'une part contre le piston mitigeur (22) et d'autre part contre le fond cylindrique (38).

9. Dispositif de protection contre les échaudures (10) selon l'une quelconque des revendications précédentes, **caractérisé en ce que** la chambre cylindrique (14) est entourée par un manchon (48) présent dans le corps de base (12).

10. Dispositif de protection contre les échaudures (10) selon l'une quelconque des revendications précédentes, **caractérisé en ce que** des sections de guidage (50, 52) destinées à guider le piston mitigeur (22) dans la chambre cylindrique (14) sont prévues sur le corps de base (12) et/ou sur le piston mitigeur (22).
